(19) Europäisches Patentamt
European Patent Office
Office européen des brevets

(11) **EP 2 139 943 B1**

(12) **FASCICULE DE BREVET EUROPEEN**

(45) Date de publication et mention de la délivrance du brevet:
**11.04.2018 Bulletin 2018/15**

(21) Numéro de dépôt: **08775652.4**

(22) Date de dépôt: **26.02.2008**

(51) Int Cl.:
*C08J 7/04* (2006.01)   *B65D 65/42* (2006.01)
*B65D 77/04* (2006.01)   *B65B 11/48* (2006.01)
*B65B 11/50* (2006.01)

(86) Numéro de dépôt international:
**PCT/FR2008/050321**

(87) Numéro de publication internationale:
**WO 2008/125763 (23.10.2008 Gazette 2008/43)**

(54) **FILM POLYAMIDE ENDUIT POUR L'ENSACHAGE DE PRODUITS A DUREE DE CONSERVATION PROLONGEE**

BESCHICHTETER POLYAMIDFILM FÜR BEUTELPRODUKTE MIT VERLÄNGERTER HALTBARKEIT

COATED POLYAMIDE FILM FOR BAGGING PRODUCTS WITH EXTENDED SHELF LIFE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.02.2007 FR 0753544**

(43) Date de publication de la demande:
**06.01.2010 Bulletin 2010/01**

(73) Titulaire: **BIOMERIEUX**
**69280 Marcy L'Etoile (FR)**

(72) Inventeurs:
• **ALLOIN, Florence**
**F-69100 Villeurbanne (FR)**
• **JANUEL, Denis**
**F-69005 Lyon (FR)**
• **SIMON, Nathalie**
**F-69126 Brindas (FR)**
• **TETART, Bruno**
**F-69290 Craponne (FR)**

(74) Mandataire: **Sprugnoli, Claude Louis Victor et al**
**BioMérieux**
**Département Propriété Industrielle**
**Chemin de l'Orme**
**69280 Marcy l'Étoile (FR)**

(56) Documents cités:
EP-A- 0 062 800    EP-A- 0 087 031
DE-B- 1 022 757    FR-A- 1 314 025
FR-A- 1 386 921    GB-A- 917 233
GB-A- 1 310 933

• DATABASE WPI Week 197423 Thomson Scientific, London, GB; AN 1974-42734V XP002489818 & JP 49 018632 B (TOYO SPINNING CO LTD) 11 mai 1974 (1974-05-11)

**Description**

Le domaine technique de la présente invention est celui des matériaux pour la réalisation d'emballage. Plus particulièrement, la présente invention concerne un film enduit destiné à emballer un article nécessitant une durée prolongée de conservation, du type milieu de culture gélosé.

De nombreux films polymères, aptes à être utilisés pour l'emballage des produits, sont présents sur le marché. On peut citer en particulier les films à usage alimentaire tels que les films en polyamide (PA), en polyéthylène téréphtalate (PET) ou en polychlorure de vinyle (PVC). D'autre films tels que ceux en polyéthylène basse densité (PEBD), utilisés pour le fardelage (regroupement de produits) ou la palettisation, peuvent être étirables et rétractables. Certains films sont également constitués en polyéthylène haute densité (PEHD) ou encore polypropylène (PP). Enfin, dans certaines applications particulières, les films peuvent être constitués d'un complexe de différents polymères cités ci-dessus.

Le choix du matériau à utiliser pour réaliser le film dépend généralement, des propriétés, dont on souhaite voir le film disposer. Ces propriétés peuvent être d'ordre mécanique, tel que la résistance aux chocs ou aux fluages, la rigidité, l'étirabilité, la déchirabilité, la résistance à la pliure, etc.. D'autres propriétés sont d'ordre physique, tel que la capacité de transfert de l'eau (barrière à la vapeur d'eau, étanchéité), le transfert de gaz, aptitude à supporter la stérilisation, la congélation ou encore à subir des micro-ondes, etc... Enfin, d'autres propriétés peuvent être d'ordre esthétique, tel que le rendu visuel (transparence, brillance, ...) ou le toucher.

Lorsque l'on s'intéresse plus particulièrement au domaine du diagnostic in vitro, qui est le domaine d'activité de la demanderesse, et en particulier aux films utilisés pour l'ensachage des milieux de culture, on constate que les matériaux habituellement utilisés sont les matériaux présentant une propriété barrière faible caractérisée par une perméabilité élevée à la vapeur d'eau ($>120g/m^2$ x 24 heures). Un tel matériau est par exemple la cellophane. Ce matériau a pour avantage de permettre à l'eau contenue dans les milieux de culture gélosés prêts à l'emploi de s'évaporer et de traverser le film. Ceci empêche alors une condensation trop importante à l'intérieur du sac constitué du film en cellophane. Par contre, l'inconvénient principal est que, la vapeur d'eau traversant le film, le taux d'humidité à l'intérieur est très bas, entraînant un dessèchement plus important et donc prématuré du milieu de culture. La durée de conservation du produit s'en trouve donc affectée.

D'autres matériaux également utilisés pour l'ensachage des milieux de culture présentent, quant à eux, une propriété barrière élevée caractérisée par une perméabilité faible à la vapeur d'eau ($<5g/m^2$ x 24 heures). Cette faible perméabilité à la vapeur d'eau ne permet pas d'évacuer la condensation importante qui se forme dans les boîtes de milieux gélosés prêts à l'emploi, notamment après que les milieux ont été coulés. Il s'ensuit que cette eau demeure dans le sac jusqu'à l'ouverture de celui-ci par l'utilisateur final, générant éclaboussures et souillures ; ce qui est rédhibitoire. De tels produits sont par exemple les polyoléfines, telles que les PP ou PE. Les polyoléfines sont largement utilisées comme matériau d'emballage. Toutefois, les procédés d'obtention de tels matériaux font que ces derniers présentent une très faible perméabilité à la vapeur d'eau. Par ailleurs, on trouve également des matériaux comportant deux films complexés, tels que des films PA + PE, destinés à accentuer leur propriété barrière à la vapeur d'eau. Ainsi des matériaux de ce type présentent des valeurs de perméabilité à la vapeur d'eau, inférieures à une dizaine de grammes/$m^2$ x 24 heures.

Le document EP-0 062 800 décrit un film polyamide, éventuellement recouvert sur une de ses faces d'une résine de polychlorure de vinylidène. Le polyamide utilisé est un copolymère de Nylon 6 et de Nylon 6.6 bi-orienté. Ce type de polymère permet au film ainsi obtenu d'avoir des propriétés de rétractabilité. Il est ainsi utilisé pour l'emballage de produits alimentaire.

Si ce film peut posséder des propriétés adaptées à l'emballage de nourriture, il ne possède pas les propriétés escomptées dans le domaine du diagnostic in vitro pour l'emballage des milieux de culture. En effet, d'une part les propriétés de rétractabilité ne se ont pas recherchées, d'autre part le film tel que décrit ne montre pas de valeurs particulières de perméabilité à la vapeur d'eau en accord avec les attentes.

Le document FR-1.386.921 décrit des compositions à base de chlorure de vinylidène pour l'enduction de supports divers. En particulier à l'exemple 9, il décrit un copolymère de chlorure de vinyle et de chlorure de vinylidène utilisé pour enduire sur une de ces faces un film de polyamide.

Le film ainsi obtenu présente une valeur de perméabilité à la vapeur d'eau excessivement faible. Autrement dit, ce film est quasi-imperméable. Un tel film n'est donc absolument adapté à une utilisation pour l'emballage de milieux de gélosés prêts à l'emploi, pour les raisons évoqués ci-dessus

Le même problème se pose avec les films polyamide décrits dans le document FR-1.314.025 ou encore dans le document GB-1 310 933.

Il s'ensuit que les sociétés productrices de milieux de culture gélosés sont toujours dans l'attente d'un emballage apte à conserver lesdits milieux de culture, dans des conditions optimales, à savoir dans un environnement suffisamment riche en vapeur d'eau pour éviter leur dessèchement prématuré, mais également suffisamment pauvre pour éviter une condensation trop importante dans le sac. Ces propriétés doivent par ailleurs être combinées avec un rendu visuel conforme aux attentes des clients, notamment en terme de transparence.

Il est du mérite des inventeurs d'avoir mis en évidence qu'il était possible d'utiliser à des fins d'emballage d'articles à durée de conservation prolongée, d'une part, un film monocouche uniquement constitué de PA non orienté, de type "cast" et d'autre part, de faire jouer au PVC et/ou PVDC utilisé comme constituant de base de l'enduit de scellage du film, le rôle de modulateur de la perméabilité à la vapeur d'eau, en faisant varier la quantité d'enduit déposé sur le film PA.

Ainsi, un premier objectif de la présente invention est donc de fournir un film dans un matériau possédant des propriétés physiques, particulièrement en terme de capacité barrière à la vapeur d'eau, aptes à permettre une durée de conservation améliorée des produits nécessitant d'être conservés pendant une durée prolongée sous une atmosphère à taux d'humidité contrôlé.

Un deuxième objectif de la présente invention est de fournir un film facilement réalisable, à partir d'un matériau largement utilisé dans le domaine de l'emballage et qui présente par ailleurs un coup de revient limité.

Un troisième objectif de la présente invention est de fournir un matériau monocouche, souple et de faible épaisseur.

Un quatrième objectif de la présente invention est de fournir un matériau facilement scellable.

Un cinquième objectif est de la présente invention est de fournir un matériau apte à répondre aux standards en terme de rendu esthétique, particulièrement en terme de transparence et de toucher.

Ces objectifs parmi d'autres, sont atteints par la présente invention qui concerne en premier lieu un film polymère monocouche, destiné à être utilisé pour l'emballage d'articles à durée de conservation prolongée, ledit film étant constitué d'une feuille de polyamide cast, recouverte, sur l'une de ses faces, d'un enduit thermoscellant, de sorte que ledit film présente une perméabilité à la vapeur d'eau moyenne comprise entre $35 g/m^2/24$ heures et $110 g/m^2/24$ heures.

Par film, on entend une couche de polyamide, sans limitation de taille, recouverte de l'enduit thermoscellant.

Par feuille, on entend une couche de polyamide, sans limitation de taille, non encore recouverte de l'enduit thermoscellant.

Par polyamide cast, on entend un polyamide non-orienté, obtenu par extrusion en filière plate. Un tel polyamide peut être par exemple celui commercialisé par la société CFP Flexible packaging S.p.A., sous la référence FILMON® CS.

Il est à noter que les valeurs de perméabilité à la vapeur d'eau décrites dans la présente demande ont été obtenues par mesure selon la norme ISO 2528:1995, à savoir à une température de 38°C et une humidité relative de 90%.

Selon une mode de réalisation préférentiel de l'invention, l'enduit thermoscellant comporte du polychlorure de vinyle (PVC), du polychlorure de vinylidène (PVDC), ou leurs mélanges.

Avantageusement, la quantité d'enduit déposée sur la feuille de polyamide est comprise entre 0,8 et $10 g/m^2$ de feuille de polyamide.

Plus avantageusement encore, la quantité d'enduit déposée sur la feuille de polyamide est comprise entre 2 et $3 g/m^2$ de feuille de polyamide.

Selon une autre caractéristique préférentielle, la couche de polyamide présente une épaisseur comprise entre 15 et 100 $\mu$m.

Le polyamide est de préférence pris dans le groupe des polyamides 6.

Un autre objet de la présente invention concerne, l'utilisation d'un film tel que décrit ci-dessus, pour emballer au moins un article à durée de conservation prolongée.

Préférentiellement, l'article est un milieu de culture des microorganismes en boîte.

Un autre objet de la présente invention concerne un sachet, destiné à l'emballage d'au moins un article à durée de conservation prolongée, dont au moins l'une des parois est constituée d'un film polymère tel que décrit ci-dessus.

Un autre objet de la présente invention concerne un procédé de réalisation d'un film polymère monocouche enduit tel que décrit ci-dessus, comprenant les étapes consistant à :

- obtenir une feuille de polyamide, et
- déposer sur ladite feuille, un enduit comportant du polychlorure de vinyle (PVC) et/ou du polychlorure de vinylidène (PVDC), de sorte que la quantité dudit enduit soit comprise entre 0,8 et $10 g/m^2$ de feuille de polyamide.

Selon une variante avantageuse du procédé de réalisation du film, la feuille de polyamide est obtenue par extrusion en filière plate sans orientation.

L'enduit peut être déposé sur la feuille de polyamide par héliogravure.

Un autre objet de la présente invention concerne un procédé de réalisation d'un sachet tel que décrit ci-dessus, comprenant les étapes consistant à :

- superposer deux films polymère selon l'invention, de sorte que les faces portant l'enduit se retrouvent en regard l'une de l'autre ;
- solidariser le bord desdits films, sur au moins 50% de leur périphérie.

Selon une alternative, le procédé de réalisation d'un sachet tel que décrit ci-dessus, comprend les étapes consistant à :

- Plier en deux ledit film, de sorte que les bords superposés dudit film se retrouvent au voisinage l'un de l'autre, les faces portant l'enduit se retrouvant en regard l'une de l'autre ;
- solidariser au moins partiellement deux bord superposés sur au moins un côté dudit film, de façon à obtenir un sachet comportant une ouverture sur au moins un de ses bords.

De façon préférentielle, l'étape de solidarisation est effectuée par thermoscellage à une température comprise entre 100 et 170 °C

Un autre objet de la présente invention concerne un procédé d'emballage d'au moins un article à durée de conservation prolongée, comprenant les étapes consistant à :

- placer l'article sur un film selon l'invention, sur la face portant l'enduit ;
- recouvrir ledit article avec une portion restée libre dudit film ou avec un autre film, de sorte que les faces portant l'enduit soient en regard l'une de l'autre,
- solidariser les bords du ou des deux films, de sorte que l'article soit emprisonné dans le sachet ainsi formé.

De façon préférentielle, l'article est un milieu de culture des microorganismes.

Selon une variante avantageuse de l'invention, le ou les films sont préalablement stérilisée(s). La méthode de stérilisation est une irradiation par rayonnements, en particulier rayons gamma ou bêta, ou tout procédé de stérilisation équivalent.

Selon un mode réalisation préférentiel, l'étape de solidarisation des bords de la ou des feuille(s) est réalisée par thermoscellage à une température comprise entre 100 et 170 °C.

Selon une variante avantageuse de l'invention, le procédé d'emballage comporte en outre les étapes additionnelles consistant à :

- placer le sachet ainsi obtenu à l'intérieur d'un deuxième sachet et
- sceller ledit deuxième sachet.

Selon une autre variante avantageuse, le procédé d'emballage comporte en outre les étapes additionnelles consistant à :

- placer le deuxième sachet ainsi obtenu à l'intérieur d'un troisième sachet et
- sceller ledit troisième sachet.

Préférentiellement, lesdits deuxième et/ou troisième sachets sont constitués d'un matériau pris dans le groupe comprenant : la cellophane, les polyoléfines, les polyamides.

Selon une variante avantageuse, lesdits deuxième et/ou troisième sachets sont constitués d'un film selon l'invention.

Un dernier objet de la présente invention concerne l'utilisation d'un sachet selon l'invention pour la réalisation d'un kit de diagnostic comprenant au moins un milieu de culture des microorganismes, contenu dans au moins un sachet tel que décrit ci-dessus.

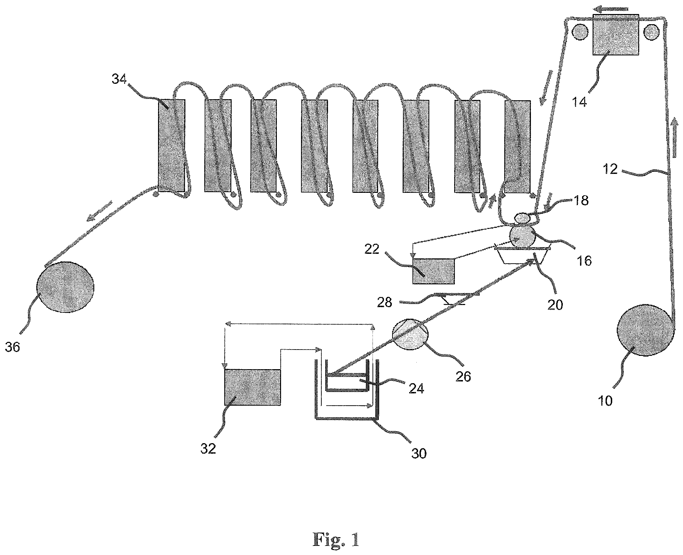

Les buts et avantages de la présente invention seront mieux compris à la lumière de des exemples, nullement limitatifs qui suivent en référence à la figure 1 qui représente un schéma descriptif du dispositif permettant de mettre en oeuvre le procédé d'enduction du film de polyamide.

Exemple 1 : Composition et réalisation d'un enduit PVDC :

1/ Composition :

Un exemple de composition d'enduit déposé sur le film de polyamide est le suivant :

- PVDC Latex DIOFAN® AO36 de *Solvin*
- Eau déminéralisée du commerce
- Silice SIPERNAT FK310 diamètre 4$\mu$ de *Degussa LTD*
- Cire MICHEMLUBE 160 de *Michelman USA*
- PA CAST de *CFP Italie*

2/ Préparation :

En prévision de la phase d'enduction, il est nécessaire de diluer le PVDC latex pour ajuster le dépôt. Cet ajustement se réalise à l'aide de l'eau déminéralisée.

- Dilution PVDC Latex :

Le mélange s'effectue de la manière suivante :

| Quantité de PVDC latex à diluer | kg | A | 100 kg |
|---|---|---|---|
| Extrait sec de PVDC latex | % | B | 55 % |
| Dilution | % | C | 30 % |
| Quantité d'eau à ajouter au PVDC latex | Kg eau | D | 83.33 kg |

Formule :

$$D = ( A \times ( B - C ) ) / C$$

- Préparation et incorporation de la silice :

La silice doit être diluée dans l'eau déminéralisée, qui doit servir également de diluant au PVDC latex.
Les composants doivent être mélangés avec une turbine à haute vitesse à 6000 tours/mn, et ce, pendant 5mn.
Ensuite, la solution peut être rajoutée au PVDC latex, de manière lente.
Calcul de la quantité de silice :

| Extrait sec silice | % humide | A | 100 % |
|---|---|---|---|
| Extrait sec PVDC latex | % humide | B | 51 % |
| Formule | g silice / kg sec PVDC latex | C | 5g / kg |
| Quantité de PVDC latex | Kg PVDC latex | D | 100 kg |
| Quantité de silice | g silice | E | 255 g |

Formule :

$$E = ( D \times C \times B ) / A$$

- Préparation et incorporation de la cire

La cire est introduite directement dans le PVDC latex. Il est important de respecter les quantités déterminées, pour ne pas détériorer la perméabilité aux gaz, le coefficient de glissant, ainsi que les propriétés de scellage.
Calcul de la quantité de cire :

| Extrait sec cire | % humide | A | 25 % |
|---|---|---|---|
| Extrait sec PVDC latex | % humide | B | 51 % |
| Formule | G sec cire / kg sec PVDC latex | C | 5 g / kg |
| Quantité de PVDC latex | kg PVDC latex | D | 100 kg |
| Quantité de cire | g cire | E | 1020 g |

Formule : Formule :

$$E = ( D \times C \times B ) / A$$

Exemple 2 : Procédé d'enduction du film de polyamide

Sur la figure 1 sont représentées les différentes étapes du procédé d'enduction de du polyamide.

Le polyamide commercialisé par la société CFP sous la référence commercial FILMON® CS se présente sous forme d'une bobine 10 constituée par une bande de polyamide enroulée, dont la laize est de 1200 mm.

La bande de polyamide 12 est déroulée et rejoint un poste 14 au niveau duquel elle subit un traitement Corona. Bien connu de l'homme du métier, le traitement Corona permet d'augmenter la tension de surface des matériaux polymères, avant que ceux-ci ne soient imprimés, collés ou revêtus. Ce traitement de surface permet une meilleure adhésion de l'enduit PVDC sur le polyamide. Ce traitement est avantageusement de 38 dyn.

Une fois le traitement Corona réalisé, la bande de polyamide rejoint le poste d'enduction. A ce stade, la bande de polyamide est enduite, par héliogravure, en passant entre deux cylindres, le cylindre d'enduction 16 et le cylindre presseur 18. Le cylindre d'enduction 16 est un cylindre gravé. Il est chargé en enduit par trempage dans un bac 20 contenant l'enduit, ce dernier venant se déposer dans les infractuosités obtenues par gravure. Le surplus d'enduit est ensuite raclé au moyen de lames en acier inoxydable. Lorsque la partie du cylindre 16 chargée en enduit, entre en contact avec la bande de polyamide, l'enduit est déposé sur cette dernière. Les cylindres d'enduction sont refroidis au moyen d'un circuit fluidique de refroidissement qui communique avec un caisson de refroidissement 22. Ainsi, la température des cylindres est maintenue entre 15 et 20°C.

Le bac de trempage 20 est alimenté en enduit par le biais d'un circuit d'alimentation. L'enduit est puisé dans un réservoir 24 et est transporté jusqu'au bac de trempage 20 au moyen d'une pompe 26. Avant d'atteindre le bac de trempage 20, l'enduit est filtré au moyen d'un filtre 28, permettant d'éliminer toute impureté.

Le réservoir 24 est disposé dans un conteneur 30, apte à permettre son refroidissement. Pour ce faire, le conteneur 30 est en communication avec un caisson de refroidissement 32 au moyen d'un circuit fluidique de refroidissement.

La quantité d'enduit déposée sur le polyamide est ainsi comprise entre 2 et 3 $g/m^2$, selon le degré de perméabilité à la vapeur d'eau souhaité.

Une fois le polyamide enduit, la bande rejoint des caissons de chauffage 34 permettant le séchage de l'enduit. A cette fin, la bande de polyamide passe dans les différents caissons, dont la température interne varie entre 140 et 160°C. Le passage dans ces caissons permet d'évacuer l'eau du dépôt humide sur le polyamide.

Avantageusement, la bande est refroidie au moyen de cylindres refroidisseurs (non représentés) en entrée et en sortie des caissons de chauffage.

Après le séchage, la bande de polyamide enduit est à enroulée en une bobine 36, au moyen d'un enrouleur.

Exemple 3 : Ensachage de 10 boîtes de Pétri de type Count tact dans un triple emballage constitué d'un sachet en polyamide 6 enduit et de deux sachets en cellophane

On prépare un bouillon de culture répondant à la formulation indiquée ci-dessous :

| | |
|---|---|
| Peptone de caséine (bovin) : | 15,0 g |
| Peptone de soja | 5,0 g |
| Extrait de levure | 6,0 g |
| Chlorure de sodium | 5,0 g |
| Pyruvate de sodium | 2,0 g |
| Lécithine de soja | 0,7 g |
| Polysorbate 80 (Tween 80) | 5,0 g |
| Thiosulfate de sodium | 0,05 g |
| L-Histidine | 1,0 g |
| Agar | 20,5 g |
| Eau purifiée | 1000 ml |

On le stérilise à la vapeur (ou à tout autre procédé de stérilisation compatible avec les milieux de culture) et on le verse sur boîtes de type Count-Tact™ et le laisse former un gel.

On place un empilage de 10 boîtes Count-Tact™ chargées d'un tel bouillon dans un sachet préformé (une soudure longitudinale et une soudure transversale) composé du film polyamide 6 "Cast" monocouche enduit (épaisseur 40$\mu$m, enduction comprise entre 2g/m$^2$ et 3g/m$^2$). Ce sachet a été préalablement radiostérilisé aux rayons gamma à une dose comprise entre 25 et 40 Kgrays. On ferme le premier sachet par un dispositif de thermoscellage, à une température de 140°C, sous 1,6 bar de pression pendant 1 seconde. On place le premier sachet à l'intérieur d'un deuxième sachet constitué de cellophane 430 LMS (perméabilité à la vapeur d'eau de 600g/m$^2$/24 heures) et on ferme ce sachet par un dispositif de thermoscellage, à une température de 170°C. On place le deuxième sachet à l'intérieur d'un troisième sachet constitué de cellophane 430 LMS et on ferme ce sachet par un dispositif de thermoscellage, à une température de 170°C. On met en coffret le triple emballage et on lui applique des doses d'irradiation aux rayons gamma de 8-12 Kgrays.

Le système ainsi décrit permet de conserver ledit milieu de culture à une température entre 2 et 8 °C.

Exemple 4: : Ensachage de 10 boîtes de Pétri format 90 mm, dans un emballage constitué d'un sachet en polyamide 6 enduit

On prépare un bouillon de culture répondant à la formulation indiquée ci-dessous :

| | |
|---|---|
| Peptones (porcin ou bovin) : | 17,2 g |
| L. Tryptophane | 0,9 g |
| Tampon Hepes | 0,4g |
| Mélange chromogène | 6,87g |
| Agar | 18 g |
| Eau purifiée | 1000 ml |

On le stérilise à la vapeur (ou à tout autre procédé de stérilisation compatible avec les milieux de culture) et le verse dans des boîtes de Pétri au format 90 mm (boîte ayant un diamètre de 90 mm) et le laisse former un gel :

Un empilage de 10 boîtes de 90mm (boîte ayant un diamètre de 90 mm) chargées d'un tel bouillon est ensaché par une machine horizontale automatique dans un sachet composé d'un film polyamide 6 "Cast" monocouche enduit d'épaisseur 40$\mu$m, comportant une enduction comprise entre 2g/m$^2$ et 3g/m$^2$. La température de scellage du sachet est de 100°C et le sachet est composé d'une soudure longitudinale et de 2 soudures transversales. Les piles de 10 boîtes sont mises en coffret.

L'emballage ainsi réalisé a permis de limiter la perte d'eau des géloses dans les conditions de stockage, habituellement utilisées, tout en maintenant un taux d'exsudation correct. Les résultats obtenus avec ce système permettent d'envisager une augmentation du temps de stockage de 47%.

### Exemple 5 :

On reproduit l'exemple 4, à la différence que la pile de 10 boîtes chargées du bouillon est ensachée, dans un sachet composé d'un film polyamide 6 "Cast" monocouche enduit d'épaisseur 30$\mu$m, comportant une enduction comprise entre 1,6g/m$^2$ et 2g/m$^2$).

Le système ainsi décrit a permis de limiter la perte d'eau des géloses dans les conditions de stockage clients tout en maintenant un taux d'exsudation correct. Les résultats obtenus avec ce système permettent d'envisager une augmentation du temps de stockage de 41%.

### Exemple 6 :

On reproduit l'exemple 3 en substituant le deuxième et/ou le troisième sachet (cellophane 430LMS) par un sachet préformé en film polyamide monocouche enduit, tel que décrit précédemment, préalablement radiostérilisé aux rayons gamma à une dose de 25-40 Kgrays (épaisseur 40$\mu$m, enduction comprise entre 2g/m$^2$ et 3g/m$^2$).

### Exemple 7 :

On reproduit l'exemple 3 en substituant le premier et/ou le deuxième et/ou le troisième sac par un sachet préformé en film polyamide monocouche enduit, tel que décrit précédemment, préalablement radiostérilisé aux rayons gamma à une dose de 25-40 Kgrays (épaisseur 30$\mu$m, enduction comprise entre 1,6g/m$^2$ et 2g/m$^2$).

**Exemple 8 :**

On prépare un bouillon de culture répondant à la formule suivante :

| | |
|---|---:|
| Peptone de caséine | 15,0 g |
| Peptone de soja | 5,0 g |
| Chlorure de sodium | 5,0g |
| Agar | 15 g |
| Eau purifiée | 1000 ml |

On le stérilise à la vapeur (ou à tout autre procédé de stérilisation compatible avec les milieux de culture) et le verse sur boîtes de 90mm et le laisse former un gel :

Un empilage de 10 boîtes de 90mm chargées d'un tel bouillon est ensaché par une machine horizontale automatique dans un sac composé d'un film monocouche enduit (épaisseur 30$\mu$m, enduction comprise entre 1,6g/m$^2$ et 2g/m$^2$). Le premier sachet est ensaché par une machine horizontale automatique dans un deuxième sachet composé de cellophane 430 LMS (perméabilité à la vapeur d'eau de 600g/m$^2$/24 heures). Le deuxième sachet est ensaché par une machine horizontale automatique dans un troisième sachet composé de cellophane 430LMS. On met en coffret le triple emballage et on lui applique des doses d'irradiation aux rayons gamma de 8-12 Kgrays.

**Revendications**

1. Utilisation d'un film polymère monocouche, pour l'emballage d'au moins un milieu de culture des microorganismes, ledit film étant constitué d'une feuille de polyamide cast, recouverte, sur l'une de ses faces, d'un enduit thermoscellant comportant du polychlorure de vinyle (PVC), du polychlorure de vinylidène (PVDC), ou leurs mélanges, la quantité d'enduit déposé sur la feuille de polyamide étant comprise entre 0,8 et 10 g/m$^2$ de feuille de polyamide, de sorte que ledit film présente une perméabilité à la vapeur d'eau moyenne comprise entre 35g/m$^2$/24 heures et 110 g/m$^2$/24 heures.

2. Utilisation selon la revendication 1, dans lequel l'enduit comporte du PVDC, une silice et une émulsion cireuse anionique.

3. Utilisation selon l'une des revendications précédentes, dans lequel la couche de polyamide présente une épaisseur comprise entre 15 et 100 $\mu$m.

4. Utilisation selon l'une des revendications précédentes, dans lequel le polyamide est un polyamide 6.

5. Procédé d'emballage d'au moins un milieu de culture de microorganismes, comprenant les étapes consistant à :

   - placer le milieu de culture de microorganismes sur un film constitué d'une feuille de polyamide cast, recouverte, sur l'une de ses faces, d'un enduit thermoscellant comportant du polychlorure de vinyle (PVC), du polychlorure de vinylidène (PVDC), ou leurs mélanges, la quantité d'enduit déposé sur la feuille de polyamide étant comprise entre 0,8 et 10 g/m$^2$ de feuille de polyamide, de sorte que ledit film présente une perméabilité à la vapeur d'eau moyenne comprise entre 35g/m$^2$/24 heures et 110 g/m$^2$/24 heures sur la face dudit film portant l'enduit ;
   - recouvrir ledit un milieu de culture de microorganismes avec une portion restée libre dudit film ou avec un autre film, de sorte que les faces portant l'enduit soient en regard l'une de l'autre,
   - solidariser les bords du ou des deux films, de sorte qu'un milieu de culture de microorganismes soit emprisonné dans le sachet ainsi formé.

6. Procédé d'emballage selon la revendication 5, dans lequel le ou les films sont préalablement stérilisée(s).

7. Procédé d'emballage selon la revendication précédente, dans lequel la méthode de stérilisation est une irradiation par rayonnements pris dans le groupe constitué par rayons gamma et/ou béta.

8. Procédé d'emballage selon l'une des revendications 5 à 7, dans lequel l'étape de solidarisation est une étape de thermoscellage à une température comprise entre 100 et 170 °C.

9. Procédé d'emballage selon l'une des revendications 5 à 8 comportant en outre les étapes additionnelles consistant à :

- placer le sachet ainsi obtenu à l'intérieur d'un deuxième sachet et
- sceller ledit deuxième sachet.

10. Procédé d'emballage selon la revendication précédente comportant en outre les étapes additionnelles consistant à :

- placer le deuxième sachet ainsi obtenu à l'intérieur d'un troisième sachet et
- sceller ledit troisième sachet.

11. Procédé d'emballage selon l'une des revendications 5 à 10, dans lequel lesdits deuxième et/ou troisième sachets sont constitués d'un matériau pris dans le groupe comprenant : la cellophane, les polyoléfines, les polyamides.

12. Procédé d'emballage selon l'une des revendications 5 à 11, dans lequel lesdits deuxième et/ou troisième sachets sont constitués d'un film selon l'une des revendications à 1 à 4.


**Patentansprüche**

1. Verwendung eines einlagigen Polymerfilms zur Verpackung mindestens eines Kulturmediums von Mikroorganismen, wobei der Film aus einer Folie aus gegossenem Polyamid besteht, welche auf einer ihrer Flächen mit einer heißversiegelten Beschichtung bedeckt ist, die Polyvinylchlorid (PVC), Polyvinylidenchlorid (PVDC) oder ihre Mischungen umfasst, wobei die Menge der auf der Polyamid-Folie abgeschiedenen Beschichtung zwischen 0,8 und 10 $g/m^2$ der Polyamid-Folie beträgt, so dass der Film eine mittlere Wasserdampfdurchlässigkeit zwischen 35 $g/m^2$/24 Stunden und 110 $g/m^2$/24 Stunden aufweist.

2. Verwendung nach Anspruch 1, wobei die Beschichtung PVDC, ein Siliciumdioxid und eine anionische Wachsemulsion umfasst.

3. Verwendung nach einem der vorhergehenden Ansprüche, wobei die Polyamid-Schicht eine Dicke zwischen 15 und 100 $\mu$m aufweist.

4. Verwendung nach einem der vorhergehenden Ansprüche, wobei das Polyamid ein Polyamid 6 ist.

5. Verfahren zur Verpackung mindestens eines Kulturmediums von Mikroorganismen, umfassend die folgenden Schritte bestehend aus:

- Platzieren des Kulturmediums von Mikroorganismen auf einem Film, der aus einer Folie aus gegossenem Polyamid besteht, welche auf einer ihrer Flächen mit einer heißversiegelten Beschichtung bedeckt ist, die Polyvinylchlorid (PVC), Polyvinylidenchlorid (PVDC) oder ihre Mischungen umfasst, wobei die Menge der auf der Polyamid-Folie abgeschiedenen Beschichtung zwischen 0,8 und 10 $g/m^2$ der Polyamid-Folie beträgt, so dass der Film eine mittlere Wasserdampfdurchlässigkeit zwischen 35 $g/m^2$/24 Stunden und 110 $g/m^2$/24 Stunden auf der die Beschichtung tragenden Fläche des Films aufweist;
- Bedecken des Kulturmediums von Mikroorganismen mit einem freigebliebenen Abschnitt des Films oder mit einem anderen Film, so dass die Flächen, welche die Beschichtung tragen, einander zugewandt sind;
- Befestigen der Ränder des oder der beiden Filme, so dass ein Kulturmedium von Mikroorganismen in dem so gebildeten Beutel eingeschlossen wird.

6. Verpackungsverfahren nach Anspruch 5, wobei der oder die Filme zuvor sterilisiert wird oder werden.

7. Verpackungsverfahren nach dem vorhergehenden Anspruch, wobei die Methode der Sterilisation eine Bestrahlung mit Strahlungen ist, die aus der Gruppe bestehend aus gamma- und/oder beta-Strahlen ausgewählt sind.

8. Verpackungsverfahren nach einem der Ansprüche 5 bis 7, wobei der Verbindungsschritt ein Schritt des Heißversiegelns bei einer Temperatur zwischen 100 und 170 °C ist.

9. Verpackungsverfahren nach einem der Ansprüche 5 bis 8, umfassend außerdem die folgenden zusätzlichen Schritte bestehend aus:

- Platzieren des so erhaltenen Beutels in das Innere eines zweiten Beutels und
- Versiegeln des zweiten Beutels.

10. Verpackungsverfahren nach dem vorhergehenden Anspruch, umfassend außerdem die folgenden zusätzlichen Schritte bestehend aus:

- Platzieren des so erhaltenen zweiten Beutels in das Innere eines dritten Beutels und
- Versiegeln des dritten Beutels.

11. Verpackungsverfahren nach einem der Ansprüche 5 bis 10, wobei der zweite und/oder der dritte Beutel aus einem Material besteht oder bestehen, das ausgewählt wird aus der Gruppe umfassend: Cellophan, Polyolefine, Polyamide.

12. Verpackungsverfahren nach einem der Ansprüche 5 bis 11, wobei der zweite und/oder der dritte Beutel aus einem Film nach einem der Ansprüche 1 bis 4 besteht oder bestehen.

**Claims**

1. The use of a single-layer polymer film, for packaging of at least one culture medium for microorganisms, said film being composed of a cast polyamide sheet, covered, on one of its faces, with a heat-sealing coating comprising polyvinyl chloride (PVC), polyvinylidene chloride (PVDC), or blends thereof, the amount of coating deposited on the polyamide sheet being between 0.8 and 10 $g/m^2$ of polyamide sheet, so that said film has an average water vapor permeability between 35 $g/m^2/24$ hours and 110 $g/m^2/24$ hours.

2. The use according to claim 1, wherein the coating comprises PVDC, a silica and an anionic wax emulsion.

3. The use as claimed in one of the preceding claims, wherein the layer of polyamide has a thickness between 15 and 100 $\mu$m.

4. The use as claimed in one of the preceding claims, wherein the polyamide is a PA-6 polyamide.

5. A process for packaging at least one culture medium for microorganisms, comprising the steps consisting in:

- placing the culture medium for microorganisms on a film said film being composed of a cast polyamide sheet, covered, on one of its faces, with a heat-sealing coating comprising polyvinyl chloride (PVC), polyvinylidene chloride (PVDC), or blends thereof, the amount of coating deposited on the polyamide sheet being between 0.8 and 10 $g/m^2$ of polyamide sheet, so that said film has an average water vapor permeability between 35 $g/m^2/24$ hours and 110 $g/m^2/24$ hours, on the face of said film bearing the coating;;
- covering said culture medium for microorganisms with a portion of said film that has remained free or with another film, so that the faces bearing the coating are opposite one another;
- fastening the edges of the film or of the two films, so that the article is trapped in the pouch thus formed.

6. The packaging process as claimed in claim 5, wherein the film or films are sterilized beforehand.

7. The packaging process as claimed in the preceding claim, wherein the sterilization method is an irradiation by rays taken from the group formed by gamma and/or beta rays.

8. The packaging process as claimed in one of claims 5 to 7, wherein the fastening step is a step of heat sealing at a temperature between 100 and 170 °C.

9. The packaging process as claimed in one of claims 5 to 8, which also comprises the additional steps consisting in:

- placing the pouch thus obtained inside a second pouch; and
- sealing said second pouch.

10. The packaging process as claimed in the preceding claim, which also comprises the additional steps consisting in:

- placing the second pouch thus obtained inside a third pouch; and

**EP 2 139 943 B1**

- sealing said third pouch.

11. The packaging process as claimed in one of claims 5 to 10, in which said second and/or third pouches are composed of a material taken from the group comprising: cellophane, polyolefins and polyamides.

12. The packaging process as claimed in one of claims 5 to 11, in which said second and/or third pouches are composed of a film as claimed in one of claims 1 to 4.

Fig. 1

**EP 2 139 943 B1**

**RÉFÉRENCES CITÉES DANS LA DESCRIPTION**

**Documents brevets cités dans la description**

- EP 0062800 A
- FR 1386921
- FR 1314025
- GB 1310933 A